Europäisches Patentamt

(19) European Patent Office

Office européen des brevets

(11) Publication number: **0 106 980**
A1

(12) **EUROPEAN PATENT APPLICATION**

(21) Application number: 83108441.3

(22) Date of filing: 26.08.83

(51) Int. Cl.³: **B 29 F 1/022,** B 29 F 1/03

(30) Priority: 24.09.82 CA 412175

(43) Date of publication of application: 02.05.84
Bulletin 84/18

(84) Designated Contracting States: **AT BE CH DE FR GB IT
LI LU NL SE**

(71) Applicant: **Gellert, Jobst Ulrich, 7A Prince Street,
Georgetown Ontario L7G 2X1 (CA)**

(72) Inventor: **Gellert, Jobst Ulrich, 7A Prince Street,
Georgetown Ontario L7G 2X1 (CA)**

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath,
Maximilianstrasse 58, D-8000 München 22 (DE)**

(54) **Injection molding core ring gate.**

(57) The system has a heated nozzle (10) separated from a cooled cavity plate (12) by an insulative air gap (72) which is bridged by a nozzle seal (76) seated around the gate (32). The valve pin (16) extends from the heated nozzle (10) through the gate (32) and the cavity extending into the ejector side of the moving platen. The valve pin (16) has a cylindrical head (90) portion which extends forwardly from a smaller diameter neck (92) portion and fits closely in the nozzle seal (76), gate (32) and a bore (84) in the ejector side of the mold. Actuating mechanism drives (42) the valve pin (16) forwardly to the gate (32) open position in which the neck portion (90) extends into the cavity (34), thereby allowing the pressurized melt to flow around it through the nozzle seal (76) and gate (32). When the cavity (34) is full and packed, the valve pin (16) is retracted to the gate (32) closed position in which the head (90) portion substantially fills the nozzle seal (76) and gate (32). Thus, in addition to sealing off the flow of melt, this motion separates the stationary melt from the cold cavity plate (12) which cools the molded part, thus providing a thermal barrier between the cold cavity (12) steel and the hot melt in the nozzle (10) ready to be injected in the next shot. Thus, this reverse action of the valve pin (16) which extends through the cavity reduces problems of plugging and sticking during operation. After the mold has been opened to eject the molded product, the sequence is repeated.

ACTORUM AG

INJECTION MOLDING CORE RING GATE

This invention relates to injection molding and more particularly to a new method or type of valve gating and a novel injection molding system for carrying it out.

The invention is applicable for molding products with a hole through them which provides for gating. The gate hole is often through the centre of the product, and this type of gating may be referred to as core ring gating.

In the past, it has been known to provide a valve gated system in which melt flow into the cavity is controlled by a valve pin which reciprocates in a heater cast or nozzle with its tip end seating in the gate in the closed position. A variety of pneumatic or hydraulically actuated mechanism may be used to drive the valve pin, and one example of this type of system is shown in the applicant's U.S. patent No. 4,286,941 entitled "Improved Injection Molding Nozzle Seal" which issued September 1, 1981. While this type of system works quite satisfactorily for many applications, it is well known that temperature and heat transfer characteristics are critical to the satisfactory operation of the system, particularly in the area of the gate where the melt flows from the hot nozzle to the cold cavity plate. When molding certain difficult materials, problems may develop from the melt solidifying in the gate area during the period of time when the valve pin is in the closed position. If there is too much solidification, the gate may remain plugged when the valve pin moves to the open position, or an unacceptable amount of solidified material may be forced into the cavity resulting in a defective product. If the temperature of the nozzle is raised to overcome this problem there is a possibility the melt may deteriorate due to overheating.

As shown in above mentioned U.S. patent No. 4,286,941, it is known to provide an insulative air gap between the hot nozzle and the cold cavity plate and to bridge it with a nozzle seal which extends around the gate to prevent escape of pressurized melt. Examples of such nozzle seals are also shown in the applicant's U.S. patent No. 4,043,740 entitled "Injection Molding Nozzle Seal" which issued August 23, 1977 and the applicant's Canadian patent application Serial No. 407,096 entitled "Improved Injection Molding Hot Tip Seal" which was filed July 12, 1982 (relating to a sprue gated system). However, the nozzle seals of the previous valve gated systems either have inner walls or surfaces which are inclined or they are larger in diameter than the tip end of the valve pin to provide for the displacement of the melt as the valve pin closes. This structure results in a thin ring of melt being held in the nozzle seal around the valve pin when it is in the forward closed position and it may solidify to a sufficient extent to produce unacceptable problems.

In the case of products which may be designed to have a gate hole through them, a previous attempt to overcome this problem has resulted in a "punch gate" system. This system has the valve pin extending in the opposite direction to normal, with the tip end extending first through the cavity and then into the gate. Thus, when it closes, the tip end "punches" the melt from the gate back into the melt passage as it seats in the gate.

Accordingly, it is an object of the invention to at least partially overcome these problems by providing a novel method and system with a valve pin which extends in the normal direction, but operates in the reverse directions by extending through the cavity. This provides for the use of a nozzle seal which fits closely around the valve pin to space the melt from the cooled cavity plate in the closed position.

To this end, in one of its aspects, the invention provides a valve gated injection molding system having a heated nozzle and a cooled cavity plate, the heated nozzle having a bore therein extending into alignment with a gate leading to a cavity in the cavity plate, an elongated valve pin which extends forwardly from the bore in the heated nozzle through the gate and through the cavity in the cavity plate, valve pin actuating mechanism which drives the valve pin between a closed position and an open position in which the valve pin extends further through the cavity, and a melt passage which extends through a manifold and around the valve pin in the heated nozzle to convey pressurized melt from a molding machine to the gate.

In another of its aspects, the invention provides a method of injection molding a product in a mold with a valve gated system having a melt passage extending to convey pressurized melt to a gate leading to a cavity in a cooled cavity plate and an elongated valve pin which extends forwardly through the gate and cavity and is reciprocated longitudinally by actuating mechanism between open and closed positions, the valve pin having a head portion which fits closely in the gate and extends forwardly from a smaller diameter neck portion, comprising the continuous sequence of steps of actuating the actuating mechanism to drive the valve pin forward to the open position in which the neck portion of the valve pin extends through the gate and into the cavity whereby the pressurized melt flows through the gate around the neck portion into the cavity, holding the valve pin in the open position until the cavity is full of melt and packed, actuating the actuating mechanism to drive the valve pin rearward to the closed position in which the head portion extends into the gate to seal off the cavity, holding the valve pin in the closed position for a predetermined period of time to allow for cooling, opening the mold to eject the product, and closing the mold.

Further objects and advantages of the invention will appear from the following description, taken together with the accompanying drawings.

Figure 1 is a section view of a portion of a valve gated injection molding system according to a preferred embodiment of the invention;

Figure 2 is an enlarged sectional view showing the gate area and cavity with the valve pin in the closed position; and

Figure 3 is a similar view showing the valve pin in the open position.

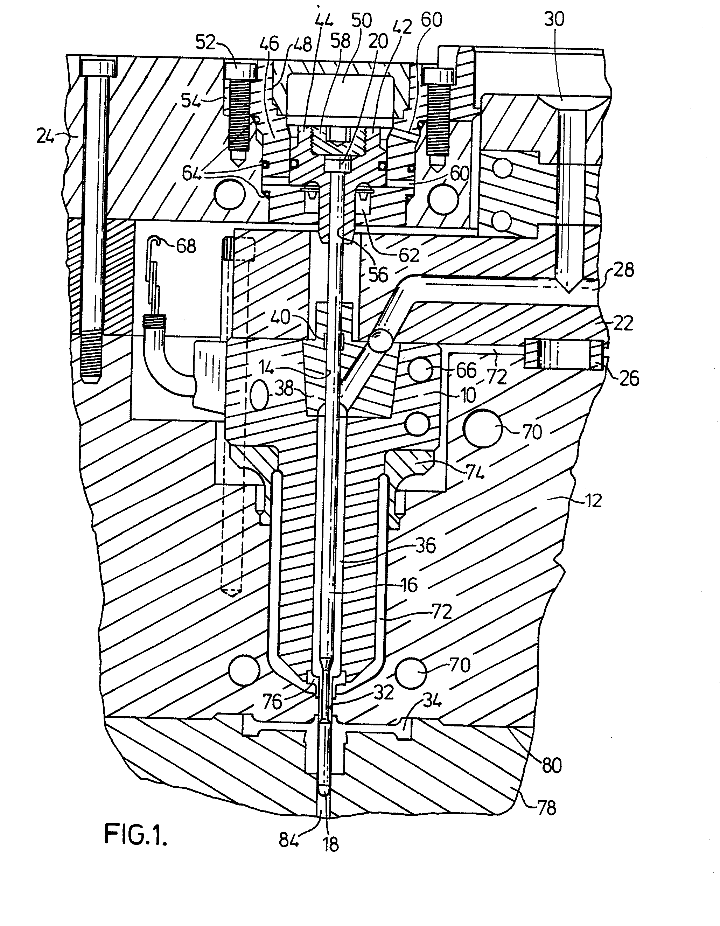

Reference is first made to Figure 1 which shows one heated nozzle 10 of a multi-cavity hydraulically actuated valve gated injection molding system seated in a cavity plate 12. The heated nozzle 10 has a central bore 14 through which extends an elongated valve pin 16 which has a tip end 18 and a driven end 20. A manifold 22 extends between the heated nozzle 10 and a back plate 24 and is positioned relative to the cavity plate 12 by a locating ring 26. A melt passage 28 branches out from a recessed inlet 30 which receives the molding machine (not shown) and extends through the heated nozzle 10 to a gate 32 which leads to the cavity 34 in the cavity plate 12. As may be seen, the melt passage 28 extends around the valve pin 16 in an enlarged portion 36 of the bore 14 through the heated nozzle 10. In this embodiment, the melt passage 28 joins the bore 14 in a stainless steel bushing seal 38 which is seated in the heated nozzle 10 formed of a beryllium copper alloy as described in the applicant's U.S. patent No. 4,026,518 entitled "Bushing Seal for Valve Gated Injection Mold" which issued May 31, 1977. The bushing seal 38 has a circumferential opening 40 which extends around the valve pin and vents to atmosphere (not shown) to allow harmful gases and fluids which seep out around the valve pin to escape.

The valve pin 16 is driven by a hydraulic actuating mechanism 42 which is seated in the back plate 24. It includes a hydraulically driven piston 44 which reciprocates in a cylinder 46. The cylinder 46 is seated in an opening in the back plate 24 in alignment with the valve pin 16 and has a threaded mouth 48 with a circular cap 50 for removal of the piston 44. The cylinder 46 is secured in position by bolts 52 which extend through a collar portion 54 and into the back plate 24. The valve pin 16 extends through a central hole 56 in the piston 44 and a plug 58 is then screwed in against the enlarged head or driven end 20 of the valve pin to seal against an oil leak and securely attach it to the piston.

The piston 44 is driven by applying a controlled source of pressurized hydraulic fluid (not shown) to opposite sides of the piston through fluid ducts 60. A V-shaped flexible ring 62 seated in the cylinder 46 provides a high temperature seal around the piston 44 to prevent leakage of the hydraulic fluid. Several O-rings 64 are also provided to prevent leakage of the hydraulic fluid.

The nozzle 10 is heated by an electric heating element 66 which is cast into it and which receives power from a source (not shown) through terminals 68. This is, of course, controlled to substantially maintain the melt flowing through the melt passage 28 at a desired temperature. On the other hand, the back plate 24 and the cavity plate 12 are cooled by cooling elements 70. In order to avoid unacceptable heat transfer, the hot manifold 22 and nozzle 10 are separated from the cooled cavity plate 12 and back plate 24 by insulative air gaps 72 which are provided by the locating ring 26 and the insulation bushing 74 which supports the heated nozzle 10 in the cavity plate 12. A hollow nozzle seal 76 bridges the air gap 72 around the gate 32 which prevents the escape of pressurized melt into the air gap 72. The nozzle seal 76 is seated in the heated nozzle 10 and the cavity plate 12 which accurately locates the forward portion of the nozzle 10 with respect to the gate 32. The nozzle seal 76 is normally formed of a corrosion resistant and relatively poor conductive metal such as a titanium alloy and its shape will be described in more detail below.

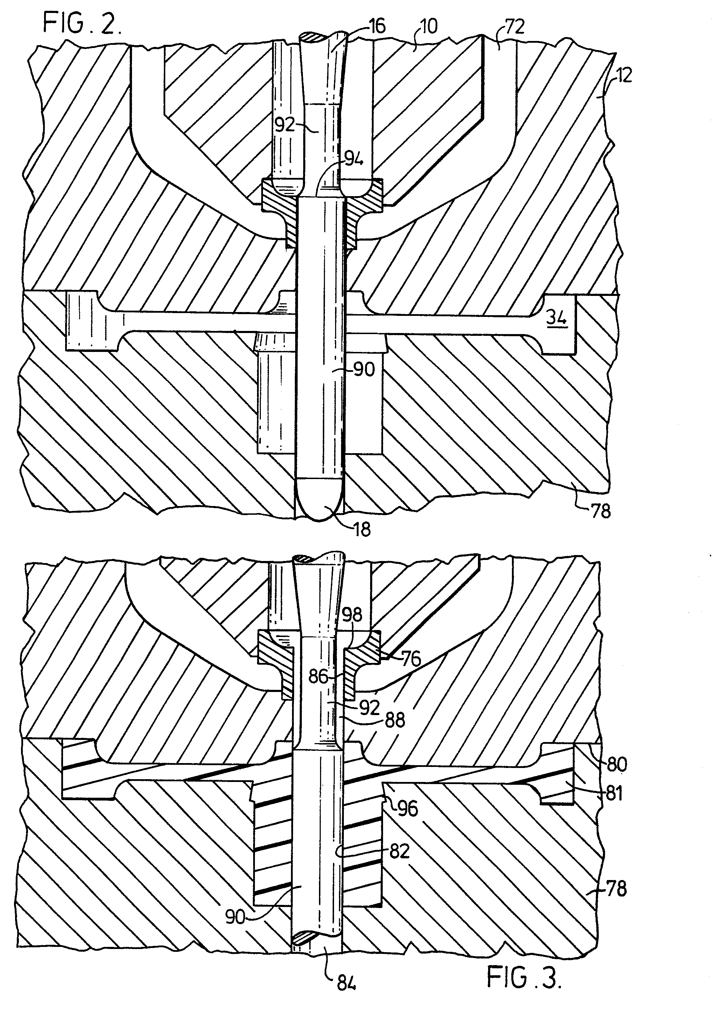

As may be seen, each cavity 34 is formed by the cavity plate 12 and a movable mold platen 78 which is opened along a parting line 80. In the particular example being illustrated, the product is a gear wheel 81 which is formed with a central gate hole 82 equal in diameter to the gate 32. The mold platen 78 also has a bore 84 which is of the same diameter and in alignment with the gate 32 and the central bore 14 of the heated nozzle 10. The nozzle seal 76 similarly has a cylindrical inner surface 86 which forms a bore 88 which is the same size and in alignment with the others to receive the valve pin 16. Referring to Figures 2 and 3, it may be seen that the valve pin 16 has a cylindrical head portion 90 adjacent the tip end 18. The head portion 90 extends forwardly from a neck portion 92 with a reduced diameter which joins the head portion 90 at a shoulder 94. The head portion 90 extends through the nozzle seal 76, gate 32, cavity 34 and into the bore 84 of the mold platen and is of a size to fit closely in them to prevent unacceptable leakage of the pressurized melt. As will be further described below, the cavity 34 is provided with a portion which forms a slightly undercut collar 96 on the product 81.

In use, following assembly of the system, electrical power is applied to the terminals 68 of the heating element 66 and the heated nozzle 10 is heated up to the desired operating temperature. Pressurized melt from the molding machine is introduced into the melt passage 28 and controlled hydraulic pressure is applied to the actuating mechanism according to a predetermined cycle in a conventional manner. When the valve pin 16 is driven forward to the open position shown in Figures 1 and 3, with the neck portion 92 extending into the cavity 34, the melt flows through the nozzle seal 76 and the gate 32 around the reduced neck portion. It is, of course, preferable that the components of the system be shaped to eliminate any "dead spots" in the melt flow and to make the flow as smooth as possible. After sufficient melt has been injected into the cavity 34 to fill it, the high injection pressure is held for a short period of time to pack. The actuating mechanism then withdraws the valve pin to the closed position shown in Figure 2 in which the shoulder 94 of the valve pin 16 is approximately in line with the shoulder 98 formed at the rear of the inner surface 86 of the nozzle seal 76. As may be seen, in this position the melt which is held at the forward end of the melt passage 28 around the neck portion 92

-10-

of the valve pin 16 is spaced a considerable distance from the cooled cavity plate 12. Furthermore, the thickness and shape of the nozzle seal 76 may be designed in conjuction with the selection of its material to optimize the amount of heat which flows through it from the heated nozzle 10 to the cavity plate 12.

When the melt in the cavity has cooled sufficiently to solidify, the mold is opened and the product ejected. In order to withdraw the molded product 81 from the valve pin 16 extending through it, it is of course necessary to overcome the forces between them. Thus, the cavity 34 is designed to form a slightly undercut collar 96 which holds the product 81 on the mold platen 78 as it separates from the cavity plate 12. Although the mold platen 78 is normally formed of a number of sections depending upon the configuration of the cavity, it is shown here as a single section for ease of illustration. Similarly, the ejector pins which eject the product 81 from the cavity 34 after it opens are not shown. The ejector pins apply enough force to the molded product 81 to sufficiently compress the undercut collar 96 and release the product from the mold platen 78. After the product has been ejected, the mold is closed again and the sequence is repeated. It is, of course, necessary that the system be sufficiently reliable to run continuously for a long

-11-

period of time without a malfunction due to plugging or sticking, nor deterioration of the polymer of the product. This system, in which the stationary melt during the period when the valve pin is in the closed position is separated further from the cooled cavity plate, has been found to provide a very considerable improvement in this regard.

Although the description of this core ring gated system and method has been given with respect to particular embodiments, it is not to be construed in a limiting sense. Variations and modifications will occur to those skilled in the art. For instance, other types of actuating mechanisms, heated nozzles or manifolds may be used. The shape of the valve pin or nozzle seal may vary somewhat, and the location of the gate hole through the product may be changed. Therefore, for a definition of the invention, reference is made to the attached claims.

0106980

-12-

The embodiments of the invention in which an exclusive property or privilege is claimed are defined as follows:

1. A valve gated injection molding system having a heated nozzle and a cooled cavity plate, the heated nozzle having a bore therein extending into alignment with a gate leading to a cavity in the cavity plate, an elongated valve pin which extends forwardly from the bore in the heated nozzle through the gate and through the cavity in the cavity plate, valve pin actuating mechanism which drives the valve pin between a closed position and an open position in which the valve pin extends further through the cavity, and a melt passage which extends through a manifold and around the valve pin in the heated nozzle to convey pressurized melt from a molding machine to the gate.

2. An injection molding system as claimed in claim 1 wherein the heated nozzle is seated in the cooled cavity plate with an insulative air gap therebetween, further including a hollow nozzle seal which extends across the air gap around the gate, the nozzle seal having a central bore which is in alignment with the bore of the heated nozzle and the gate.

3. An injection molding system as claimed in claim 2 wherein the nozzle seal has an internal diameter

Claim 3 continued...

0106980

-13-

substantially equal to the diameter of the gate, and wherein the elongated valve pin has a generally cylindrical head portion extending forwardly from a neck portion with a reduced diameter, the head portion extending through the nozzle seal and fitting sufficiently closely to prevent substantial leakage of the melt.

4.      An injection molding system as claimed in claim 3 wherein the head portion of the valve pin joins the neck portion at a shoulder, and the actuating mechanism drives the valve pin forward to the open position in which the shoulder is sufficiently inside the cavity to provide for the flow of melt through the gate around the neck portion.

5.      An injection molding system as claimed in claim 4 wherein the nozzle seal has a generally cylindrical inner surface which terminates at a rearward shoulder, and the actuating mechanism drives the valve pin rearward to the closed position in which the shoulder on the valve pin is approximately adjacent said rearward shoulder of the nozzle seal.

6.      An injection molding system as claimed in claim 2 wherein the nozzle seal is seated in the heated nozzle and the cooled cavity plate.

7.      An injection molding system as claimed in claim 6 wherein the nozzle seal is formed of a titanium alloy.

8.          A method of injection molding a product in a mold with a valve gated system having a melt passage extending to convey pressurized melt to a gate leading to a cavity in a cooled cavity plate and an elongated valve pin which extends forwardly through the gate and cavity and is reciprocated longitudinally by actuating mechanism between open and closed positions, the valve pin having a head portion which fits closely in the gate and extends forwardly from a smaller diameter neck portion, comprising the continuous sequence of steps of:

(a)   actuating the actuating mechanism to drive the valve pin forward to the open position in which the neck portion of the valve pin extends through the gate and into the cavity whereby the pressurized melt flows through the gate around the neck portion into the cavity,

(b)   holding the valve pin in the open position until the cavity is full of melt and packed,

(c)   actuating the actuating mechanism to drive the valve pin rearward to the closed position in which the head portion extends into the gate to seal off the cavity,

(d)   holding the valve pin in the closed position for a predetermined period of time to allow for cooling,

(e)   opening the mold to eject the product, and

(f)   closing the mold.

9.      A method as claimed in claim 8 wherein the valve pin extends through a heated nozzle which is seated in the cooled cavity plate with an insulative air gap therebetween which is bridged by a hollow nozzle seal having a central bore which is substantially equal in diameter to and in alignment with the gate, whereby step (c) includes withdrawing the valve pin to a position wherein the head portion of the valve pin substantially fills the bore of the nozzle seal and the gate.

0106980

FIG.1.

0106980

2/2

FIG. 2.

16  10  72

12

92

94

34

90

78

18

FIG. 3.

98

76

86

92  88

80

81

96

82

78

90

84

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 948 623 (J.U. GELLERT) | | B 29 F 1/022<br>B 29 F 1/03 |
| A | DE-A-3 016 702 (NIPKI PO TECHNOLOGIA NA MATERIALITE) | | |
| A | DE-U-7 213 462 (K. HERZOG et al.) | | |
| A | US-A-3 010 156 (P.M. SMITH) | | |
| D,A | US-A-4 043 740 (J.U. GELLERT) | | |
| D,A | US-A-4 286 941 (J.U. GELLERT) | | **TECHNICAL FIELDS SEARCHED (Int. Cl. ³)**<br><br>B 29 D 15/00<br>B 29 F 1/00 |

The present search report has been drawn up for all claims

| Place of search | Date of completion of the search | Examiner |
|---|---|---|
| BERLIN | 16-12-1983 | FINDELI B.F.C |